## Europäisches Patentamt
## European Patent Office
## Office européen des brevets

(19)

(11) Veröffentlichungsnummer: **0 249 002**
**B1**

(12) **EUROPÄISCHE PATENTSCHRIFT**

(45) Veröffentlichungstag der Patentschrift:
**22.03.89**

(51) Int. Cl.⁴: **B60T 1/10, B60K 9/00**

(21) Anmeldenummer: **87105345.0**

(22) Anmeldetag: **10.04.87**

(54) **Anlage mit Energiespeicher- und -abgabeeinrichtung.**

(30) Priorität: **11.06.86 DE 3619639**

(43) Veröffentlichungstag der Anmeldung:
**16.12.87 Patentblatt 87/51**

(45) Bekanntmachung des Hinweises auf die Patenterteilung:
**22.03.89 Patentblatt 89/12**

(84) Benannte Vertragsstaaten:
**CH DE FR LI SE**

(56) Entgegenhaltungen:
**EP-A- 0 047 642**

(73) Patentinhaber: **M.A.N. Nutzfahrzeuge GmbH, Dachauer Strasse 667 Postfach 50 06 20, D-8000 München 50(DE)**

(72) Erfinder: **Hagin, Faust, Poccistrasse 2, D-8000 München 2(DE)**

## Beschreibung

Die Erfindung betrifft eine Anlage mit Energiespeicher- und -abgabeeinrichtung mit Merkmalen der im Oberbegriff des Anspruchs 1 angegebenen Art.

Bei solchen Anlagen sind für die Beherrschung der Zusammenarbeit von Hydrowandler und Speichern zwischen letzteren und den Anschlüssen eines Hydrowandlers relativ aufwendige hydraulische Umschaltvorrichtungen vorhanden. Die Speicher selbst sind jeweils mit einem zugeordneten Absperrventil versehen. Die erforderlichen Ventile sind sowohl was deren Aufbau als auch deren Ansteuerung anbelangt, relativ kompliziert und damit teuer.

Es ist demgegenüber daher Aufgabe, für die Umsteuerung der Hydrowandler-Arbeitsweise und die Absperrung der Speicher eine möglichst einfache, aus billigen Bauteilen bestehende Vorrichtung anzugeben.

Diese Aufgabe ist bei einer Anlage der eingangs genannten Art durch die im Kennzeichen des Anspruchs 1 angegebene Vorrichtung gelöst.

Durch die Verwendung von nur vier 2/1-Wege-Absperrventilen ergibt sich eine relativ einfache, aus billigen Ventilen bestehende Umsteuervorrichtung. Durch die erfindungsgemäße schaltungsmäßige Zuordnung der vier 2/1-Wege-Absperrventile ist außerdem auch eine Absperrung bzw. Freigabe der Zuleitung zum jeweiligen Speicher möglich.

Ausgestaltungen und Weiterbildungen der erfindungsgemäßen Lösung sind in den Unteransprüchen angegeben.

Nachstehend ist die erfindungsgemäße Einrichtung anhand der Zeichnung näher erläutert. In der Zeichnung zeigen:

Fig. 1 eine erste Ausführungsform einer Energiespeicher- und -abgabeeinrichtung, und
Fig. 2 eine zweite Ausführungsform einer Energiespeicher- und -abgabeeinrichtung.

In den Figuren sind gleiche bzw. einander entsprechende Bauteile der Übersichtlichkeit wegen mit gleichen Bezugszeichen angezogen.

Die dargestellten Energiespeicher- und -abgabeeinrichtungen sind Teil einer Anlage z.B. einer Antriebsanlage in einem Kraftfahrzeug mit Bremsenergierückgewinnung. Unter dem Begriff Anlagen sind generell solche Einrichtungen zu verstehen, bei denen in Verbindung mit bestimmten Bewegungsabläufen Energie frei wird, die speicherbar und bei Bedarf wieder an die Einrichtung rückführbar ist.

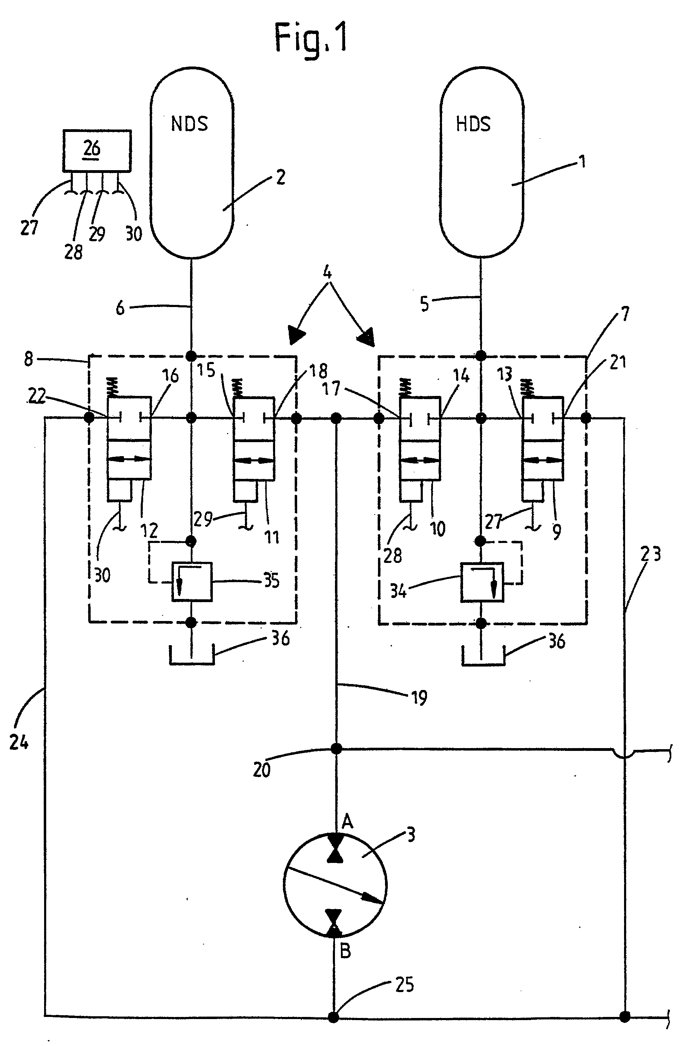

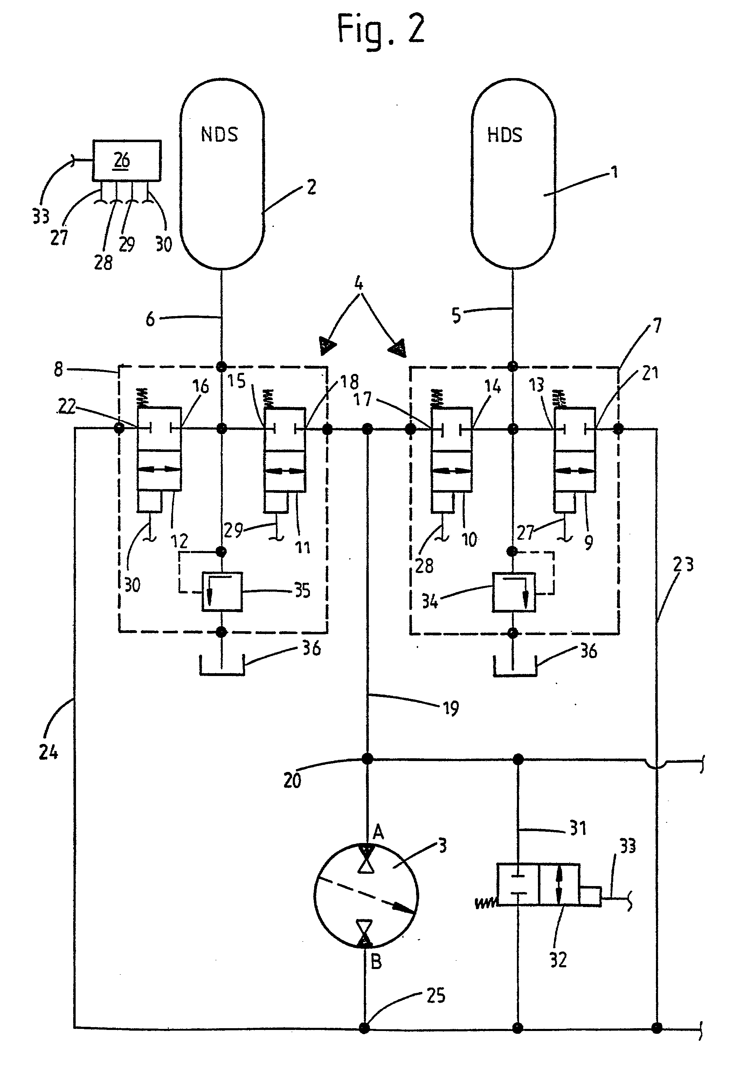

Die Energiespeicher- und -abgabeeinrichtung besteht aus einem Hochdruckhydrospeicher (1), einem Niederdruckhydrospeicher (2) und einem an einer leistungsabgebenden und -aufnehmenden Einrichtung angeschlossenen bzw. anschließbaren Hydrowandler (3). Bei den beiden Speichern (1, 2) handelt es sich um übliche Blasen- bzw. Kolbenspeicher bekannter Bauart. Der Hydrowandler (3) ist ebenfalls ein käufliches Aggregat bekannter Bauart. Dabei kann es sich um Schrägachsen-, Schrägscheiben-, oder Radialkolben-Bauart handeln. Der Hydrowandler ist vorzugsweise sowohl als Motor wie auch als Pumpe betreibbar. Der Fall des Ausführungsbeispieles gemäß Fig. 1 verwendete Hydrowandler ist verstellbar; die Verstellung erfolgt durch Änderung des Schwenkwinkels. Bei dem beim Ausführungsbeispiel gemäß Fig. 2 verwendeten Hydrowandler (3) handelt es sich um eine Bauart, die nicht verstellbar oder nicht bis zu einem Null-Fördervolumen verstellbar ist.

Dem Hochdruckhydrospeicher (1) ist eine insgesamt mit (4) bezeichnete Umsteuervorrichtung zugeordnet, mit der ein Laden bzw. Entladen des Hochdruckhydrospeichers (1) vom Niederdruckhydrospeicher (1) aus bzw. in diesen unter Zuhilfenahme des Hydrowandlers (3) sowie eine Absperrung bzw. Freigabe der Zuleitung (5) zum Hochdruckspeicher (1) bzw. (6) zum Niederdruckspeicher (2) durchführbar ist. Dabei sind jedem der beiden Speicher (1, 2) je zwei parallel geschaltete, vorzugsweise in jeweils einem Block (7) bzw. (8) (gestrichelt umrandet) zusammengefaßte 2/1-Wege-Absperrventile (9, 10) bzw. (11, 12) zugeordnet. Die beiden Ventile (9, 10) sind im Block (7) zusammengefaßt dem Hochdruckhydrospeicher (1) zugeordnet, die beiden Venttile (11, 12) dagegen sind im Block (8) zusammengefaßt dem Niederdruckhydrospeicher (2) zugeordnet. Der erste Anschluß (13) des 2/1-Wege-Absperrventiles (9) und der erste Anschluß (14) des 2/1-Wege-Absperrventiles (10) stehen mit der zum Hochdruckhydrospeicher (1) führenden Speicherzuleitung (5) in Verbindung. Der erste Anschluß (15) des 2/1-Wege-Absperrventiles (11) und der erste Anschluß (16) des 2/1-Wege-Absperrventiles (12) stehen mit der zum Niederdruckhydrospeicher (2) führenden Speicherzuleitung (6) in Verbindung. Die jeweils zweiten Anschlüsse zweier je einem Speicher (1) bzw. (2) zugeordneten 2/1-Wege-Absperrventile, also der zweite Anschluß (17) des 2/1-Wege-Absperrventiles (10) und der zweite Anschluß (18) des 2/1-Wege-Absperrventiles (11) stehen über eine Anschlußleitung (19) mit dem Arbeitseingang (20) des Hydrowandlers (3) in Verbindung. Die jeweils zweiten Anschlüsse der beiden anderen 2/1-Wege-Absperrventile, also der zweite Anschluß (21) des 2/1-Wege-Absperrventiles (9) und der zweite Anschluß (22) des 2/1-Wege-Absperrventiles (12) stehen über jeweils eine Anschlußleitung (23) bzw. (24) mit dem Arbeitsausgang (25) des Hydrowandlers (3) in Verbindung. Die 2/1-Wege-Absperrventile sind vorzugsweise durch elektromagnetisch betätigbare Umschaltventile gebildet. Jedes der vier 2/1-Wege-Absperrventile ist an einer elektrische Steuerbefehle abgebenden Steuereinrichtung (26) über eine zugehörige Steuerleitung (27, 28, 29, 30) angeschlossen. Durch wahlweises, paarweises Schalten je eines der beiden einem Speicher zugeordneten 2/1-Wege-Absperrventile, also entweder der beiden 2/1-Wege-Ventile (9) und (11) oder der beiden 2/1-Wege-Absperrventile (10) und (12) ist entweder der Hochdruckhydrospeicher (1) oder der Niederdruckspeicher (2) an den Arbeitseingang (20) des Hydrowandlers (3) anlegbar und dadurch der Umsteuerweg vom Arbeitsausgang des letzteren zum jeweils anderen Speicher (1) bzw. (2) durchschaltbar. Hierdurch sind auf einfache Weise die Lade-und Entladevorgänge des Hochdruckhydrospeichers (1) steuerbar. Außerdem sind die Speicherzuleitungen (5) bzw. (6) unter Zuhilfenahme der jeweils beiden 2/1-Wege-Absperrventile (9, 10) bzw. (11, 12) absperrbar. Um diese Lade- und Entladevorgänge des Hochdruckhydrospeichers (1) auch im Falle des Ausführungsbeispiels nach Fig. 2 mit dem nicht verstellbaren bzw. nicht bis auf Null-Fördervolumen verstellbaren Hydrowandler in allen Arbeitsbereichen durchführen zu können, ist in einen Parallelzweig (31) zum Hydrowandler (3) ein weiteres 2/1-Wege-Absperrventil (32) eingeschaltet, mit dem der Parallelzweig (31) bedarfsweise auf- und zusteuerbar ist. Die Steuerung des 2/1-Wege-Absperrventiles (32) erfolgt ebenfalls von der Steuereinrichtung (26) her über eine entsprechende Steuerleitung (33).

Um eine Überladung des jeweiligen Speichers zu vermeiden, ist an jeder Speicherzuleitung (5) bzw. (6) ein Druckbegrenzungsventil (34) bzw. (35) angeschlossen, das mit einem Hydrauliköltank (36) in Verbindung steht. Das Druckbegrenzungsventil (34) ist dabei auf einen im Hochdruckhydrospeicher (1) zulässigen Absteuerdruck eingestellt, während das Druckbegrenzungsventil (35) auf den gewünschten oder zulässigen Druck des Niederdruckhydrospeichers (2) eingestellt ist. Das Druckbegrenzungsventil ist im Block (7) und das Druckbegrenzungsventil (35) im Block (8) integriert. Generell ist die Anordnung der Ventile in den Blöcken (7) bzw. (8) und deren jeweilige Ausgestaltung so, daß die Blöcke (7) und (8) leicht durch neue austauschbar und zu diesem Zweck mit einfach lösbaren Verbindungen zu den Leitungen (5, 6, 19, 23, 24) ausgestattet sind.

## Patentansprüche

1. Anlage mit Energiespeicher- und -abgabeeinrichtung, umfassend einen Hochdruckhydrospeicher (1) und eine Umsteuervorrichtung (4) für Laden bzw. Entladen des letzteren von einem Niederdruckhydrospeicher (2) aus bzw. in diesen unter Zuhilfenahme eines an einer leistungsabgebenden und -aufnehmenden Einrichtung angeschlossenen bzw. anschließbaren Hydrowandlers (3), wobei die Durchschaltung des jeweiligen Umsteuerweges in einer Richtung bei gleichzeitiger Absperrung des Umsteuerweges in anderer Richtung elektrisch gesteuert durch Absperrventile erfolgt, dadurch gekennzeichnet, daß jedem Speicher (1, 2) je zwei parallel geschaltete 2/1-Wege-Absperrventile (9, 10 bzw. 11, 12) zugeordnet sind, deren jeweils erste Anschlüsse (13, 14 bzw. 15, 16) mit der jeweiligen Speicherzuleitung (5 bzw. 6) in Verbindung stehen, daß ferner die jeweils zweiten Anschlüsse (17, 18) zweier je einem Speicher (1, 2) zugeordneter 2/1-Wege-Absperrventile (10, 11) mit dem Arbeitseingang (20) des Hydrowandlers (3), die jeweils zweiten Anschlüsse (21, 22) der beiden anderen 2/1-Wege-Absperrventile (9, 12) dagegen mit dem Arbeitsausgang (25) des Hydrowandlers (3) in Verbindung stehen, und daß durch wahlweises paarweises Schalten je eines der beiden einem Speicher (1 bzw. 2) zugeordneten 2/1-Wege-Absperrventile (9, 11) bzw. (10, 12) entweder der eine oder der andere Speicher (1 bzw. 2) an den Arbeitseingang (20) des Hydrowandlers (3) anlegbar und der Umsteuerweg vom Arbeitsausgang (25) des letzteren zum anderen Speicher durchschaltbar ist.

2. Anlage nach Anspruch 1, dadurch gekennzeichnet, daß die 2/1-Wege-Absperrventile (9, 10, 11, 12) durch elektromagnetisch betätigbare, über Steuerleitungen (27, 28, 29, 30) an einer Steuereinrichtung (26) angeschlossene Umschaltventile gebildet sind.

3. Anlage nach Anspruch 1, dadurch gekennzeichnet, daß die je einem Speicher (1) bzw. (2) zugeordneten beiden 2/1-Wege-Absperrventile (9, 10) bzw. (11, 12) in jeweils einem Block (7) bzw. (8) zusammengefaßt sind.

4. Anlage nach Anspruch 1, dadurch gekennzeichnet, daß an jeder Speicherzuleitung (5) bzw. (6) ein Druckbegrenzungsventil (34 bzw. 35) angeschlossen ist, das mit einem Hydrauliköltank (36) in Verbindung steht.

5. Anlage nach den Ansprüchen 3 und 4, dadurch gekennzeichnet, daß das jeweilige Druckbegrenzungsventil (34) bzw. (35) im jeweiligen Block (7) bzw. (8) integriert ist.

## Claims

1. An installation having an energy storage and output device, comprising a high pressure hydrostore (1) and a reversing device (4) for loading and unloading the latter from or into a low pressure hydrostore (2) with the aid of a hydroconverter (3) which is connected or is connectable to a power output and input device, the connecting of the respective reversing path in one direction with the simultaneous closing of the reversing path in the other direction being electrically controlled by stop valves, characterised in that two 2/1-way stop valves (9, 10 or 11, 12), which are connected in parallel, are associated with each store (1, 2), the respective first connections (13, 14, or 15, 16) of said stop valves being connected with the respective store feed line (5 or 6), furthermore in that the respective second connections (17, 18) of two of the 2/1-way stop valves (10, 11) associated with a store (1, 2) in each case are connected with the working input (20) of the hydroconverter (3), whereas the respective second connections (21, 22) of the two other 2/1-way stop valves (9, 12) are connected with the working output (25) of the hydroconverter (3), and in that by the selective switching in pairs of one of the two 2/1-way stop valves (9, 11 or 10, 12) associated with a store (1 or 2), one or the other of the stores (1 or 2) can be connected to the working input (20) of the hydroconverter (3) and the reversing path can be connected through from the working output (25) of the hydroconverter (3) to the other store.

2. An installation according to claim 1, characterised in that the 2/1-way stop valves (9, 10, 11, 12) are formed by reversing valves which can be electromagnetically actuated and which are connected via control lines (27, 28, 29, 30) to a control device (26).

3. An installation according to claim 1, characterised in that the two 2/1-way stop valves (9, 10) or (11, 12) associated with a store (1) or (2) in each case are combined in each case to form a block (7) or (8).

4. An installation according to claim 1, characterised in that a pressure limiting valve (34 or 35) which is connected to a hydraulic oil tank (36) is connected to each store feed line (5) or (6).

5. An installation according to claims 3 and 4, characterised in that the respective pressure limiting valve (34) or (35) is integrated in the respective block (7) or (8).

**Revendications**

1. Installation avec un dispositif d'accumulation et de récupération d'énergie, comprenant un accumulateur hydraulique haute pression (1) et un dispositif d'inversion (4) pour charger et décharger ce dernier à partir d'un accumulateur hydraulique basse pression (2) ou dans celui-ci en ayant recours à un convertisseur hydraulique (3) raccordé ou pouvant être raccordé à un dispositif fournissant et absorbant de la puissance, sur lequel la connexion de la voie de passage dans une direction avec fermeture simultanée de la voie de passage dans l'autre direction est effectuée par des soupapes d'arrêt commandées électriquement, caractérisé en ce que deux soupapes d'arrêt à deux positions et à une voie, (9, 10 et 11, 12) montées en parallèles sont respectivement adjointes à chaque accumulateur (1, 2), les premiers raccords (13, 14 et 15, 16) de ces soupapes se trouvant respectivement en liaison avec la conduite d'amenée (5; 6) correspondante, en ce que, en outre, les seconds raccords (17, 18), de deux soupapes d'arrêt à deux positions et à une voie (10, 11) respectivement adjointes à un accumulateur (1, 2) sont en liaison avec l'entrée de travail (20) du convertisseur hydraulique (3), alors que, par contre, les seconds raccords (21, 22) des deux autres soupapes d'arrêt à deux positions et à une voie (9, 12) se trouvent en liaison avec la sortie de travail du convertisseur hydraulique (3) et en ce qu'on peut, au moyen d'une commande par paire sélective, de chacune des deux soupapes d'arrêt à deux positions et à une voie (9, 11 ou 10, 12), relier l'un ou l'autre des accumulateurs (1, 2) à l'entrée de travail (20) du convertisseur hydraulique (3) et on peut commander l'inversion de la sortie de travail (25) de ce dernier sur l'autre accumulateur.

2. Installation selon la revendication 1, caractérisée en ce que les soupapes d'arrêt à deux positions et à une voie (9, 10, 11, 12) sont constituées par des soupapes d'inversion à commande électromagnétique, raccordées par des lignes de commande (27, 28, 29, 30) à un dispositif de commande (26).

3. Installation selon la revendication 1, caractérisée en ce que les soupapes d'arrêt à deux positions et à une voie (9, 10 et 11, 12) sont respectivement regroupées en un bloc (7, 8).

4. Installation selon la revendication 1, caractérisée en ce qu'une soupape de limitation de pression (34, 35), qui se trouve en liaison avec un réservoir de liquide hydraulique (36) est raccordée à chaque conduite d'amenée.

5. Installation selon les revendications 3 et 4, caractérisée en ce que chaque soupape de limitation de pression (34, 35) est incorporée dans le bloc correspondant (7, 8).

# Fig.1

# Fig. 2